# EUROPÄISCHE PATENTSCHRIFT

(11) **EP 1 478 451 B1**
(45) Veröffentlichungstag und Bekanntmachung des Hinweises auf die Patenterteilung: **11.05.2005**
(21) Anmeldenummer: 03742921.4
(22) Anmeldetag: 14.01.2003
(51) Int. Cl.: B01D 69/10, B01D 71/02, B01D 53/22, H01M 2/16

(54) **KERAMISCHE MEMBRAN AUF BASIS EINES POLYMER- ODER NATURFASERN AUFWEISENDEN SUBSTRATES, VERFAHREN ZU DEREN HERSTELLUNG UND VERWENDUNG**
CERAMIC MEMBRANE BASED ON A SUBSTRATE CONTAINING POLYMER OR NATURAL FIBRES, METHOD FOR THE PRODUCTION AND USE THEREOF
MEMBRANE CERAMIQUE A BASE D'UN SUBSTRAT PRESENTANT DES FIBRES POLYMERIQUES OU NATURELLES, SON PROCEDE DE PRODUCTION ET SON UTILISATION

(30) Priorität: 26.02.2002 DE 10208280
(43) Veröffentlichungstag der Anmeldung: 24.11.2004
(73) Patentinhaber: Degussa AG, 40474 Düsseldorf (DE)
(72) Erfinder: HENNIGE, Volker, 48249 Dülmen (DE); HYING, Christian, 46414 Rhede (DE); HÖRPEL, Gerhard, 48301 Nottuln (DE)
(86) Internationale Anmeldenummer: PCT/EP2003/000257
(87) Internationale Veröffentlichungsnummer: WO 2003/072231

(56) Entgegenhaltungen:
- WO-A-00/21648
- WO-A-99/15262
- FR-A- 2 776 534
- US-A- 5 885 657
- US-A1- 2002 062 737

## Beschreibung

Die vorliegende Erfindung betrifft eine Membran, insbesondere Mikrofiltrationsmembran die ein Substrat auf Basis von Vliesen Polymer- oder Naturfasern und eine keramische Beschichtung aufweist sowie ein Verfahren zu deren Herstellung und die Verwendung der Membran.

Es sind verschiedene Anwendungen bekannt, bei denen Verbundwerkstoffe, die Keramiken aufweisen, verwendet werden.

Der Vorteil der Keramik aufweisenden Verbundwerkstoffe liegt darin, dass die keramischen Beschichtungen gegenüber den meisten chemischen Substanzen, wie z. B. organischen Lösemitteln, chemisch inert sind und zudem überwiegend gegenüber Säuren oder Laugen beständig sind. Aus diesem Grund werden Metalle oft mit Keramiken beschichtet, um das Metall vor chemischen Einflüssen zu schützen. Durch die poröse Oberfläche eines mit einer Keramik beschichteten Verbundwerkstoffes erhöht sich zudem die Abriebsfestigkeit von nachträglich aufgebrachten Lacken oder Schutzüberzügen. Keramiken selbst eignen sich aufgrund ihrer porösen Oberfläche außerdem sehr gut für den Einsatz als Membranen oder Filter.

Der Nachteil der Keramiken bzw. der Keramiken aufweisenden Verbundwerkstoffe ist die Sprödigkeit der Keramik. Mit Keramik beschichtete Metalle sind deshalb sehr stoßempfindlich und die Keramikbeschichtung übersteht kaum eine mechanische Beanspruchung ohne dass die Oberfläche der Keramik verletzt wird. Da auch das Biegen eines solchen keramischen Verbundwerkstoffes zur Verletzung der Keramikschicht führt, sind die Anwendungsgebiete solcher keramischer Verbundwerkstoffe zur Zeit noch begrenzt.

Keramische Verbundwerkstoffe werden trotz der Nachteile häufig auch in der Filtrationstechnik oder Membrantechnik eingesetzt.

In EP 0 358 338 wird ein Verfahren beschrieben, mit welchem durch Aufbringen einer ein Metalloxidsol aufweisenden wässrigen Lösung und Verfestigen dieser Lösung auf einer Oberfläche, vorzugsweise einer glatten Metalloberfläche, diese Oberfläche durch eine Keramikschicht geschützt werden kann. Der wässrigen Lösung kann zur Verbesserung der Haftung der keramischen Schicht auf der zu schützenden Oberfläche ein Metalloxidpulver und/oder ein Haftverbesserer zugesetzt werden. Das Verfahren beschreibt nicht das Aufbringen von Schichten auf stoffdurchlässige Trägermaterialien.

WO 96/00198 lehrt die Herstellung keramischer Schichten auf Oberflächen von diversen Materialien. Diese beschichteten Materialien können als Membranen zur Nanofiltration eingesetzt werden. Bei diesem Verfahren wird Titandioxidsol mit Aluminiumoxidpulver dispergiert, wobei Salzsäure zur Peptisierung verwendet wird.

US 4,934,139 lehrt ein Verfahren zur Herstellung keramischer Membranen für die Ultrafiltration und Mikrofiltration. Zur Herstellung solcher keramischer Membranen wird ein Sol oder eine Partikelsuspension auf einen porösen Metallträger gebracht und gesintert. Der poröse Träger kann Edelstahl-Sintermetall oder Edelstahlgewebe sein, in dessen Zwischenräume Metallpartikel eingesintert wurden. Metallgewebe mit Zwischenräumen über 100 µm lassen sich ohne Einsintern von Metallpartikeln nach diesem Verfahren nicht herstellen. Das Verfahren vermeidet, dass die Suspension oder das Sol in die Zwischenräume des Trägermaterials eindringen.

In US 5,376,442 und US 5,605,628 wird zur Überbrückung von Zwischenräumen im Trägermaterial ein organischer Binder in die Beschichtungslösung eingearbeitet. Dieser Binder muss beim Verfestigen wieder entfernt werden, was zu Unregelmäßigkeiten in der Keramikoberfläche und/oder -struktur führen kann.

Ebenso wird in DE 42 10 413 das anorganische Pulver mit Hilfe eines polymeren Harzes fixiert. Dieses Harz muss beim Verfestigen ebenfalls wieder entfernt werden, was zu Unregelmäßigkeiten in der Keramikoberfläche und/oder -struktur führen kann.

In WO 99/15262 wird die Herstellung eines flexiblen, stoffdurchlässigen Verbundwerkstoffes auf Basis eines durchbrochenen Trägermaterials beschreiben. Hierin kann der Träger aus verschiedenen Materialien bestehen. U. a. auch aus polymeren perforierten Folien, Geweben aus Polymer, Naturfaser, Glas und Stahl oder Metallvliesen. Die Beschichtung erfolgt mit einem Sol, welches zu sehr großen Teilen aus Wasser bzw. aus wässrigen Lösungen starker Säuren besteht, in das Partikel der Oxide von Aluminium, Titan, Zirkonium oder Silizium eingerührt wurden. Zudem kann das Sol auch Organosilyl-Verbindungen wie Methyltriethoxysilan enthalten. Diese stoffdurchlässigen Verbundmaterialien lassen sich u. a. als Membranen in der Filtration einsetzen.

Alle bisher beschriebenen Mikrofiltrationsmembranen weisen einen recht geringen transmembranen Fluss auf. Die keramischen Beschichtungen sind zudem spröde und werden beim Einsatz solcher Membranen bei zu geringer Haftung leicht vom Träger abgelöst. Solche Membranen sind dann unbrauchbar.

Es war deshalb Aufgabe der vorliegenden Erfindung eine flexible Membran bereitzustellen, die einen hohen transmembranen Fluss aufweist und die haltbarer ist als bisher bekannte Membranen.

Überraschenderweise wurde jetzt gefunden, dass die Verwendung von polymeren Vliesmaterialien anstelle der perforierten Folien eine deutliche Erhöhung des Transmembranen Flusses erreicht werden kann. Dies liegt an der größeren Porosität des Vlieses. Zudem konnte überraschenderweise festgestellt werden, dass Membranen die Vliesmaterialien auf Basis von Polymeren aufweisen, deutlich haltbarer und flexibler sind als Membranen, die keramische Beschichtungen auf Glas- oder auf Metallgewebe oder -vliesen oder auf Polymerfolien aufweisen.

Gegenstand der vorliegenden Erfindung ist deshalb eine Membran, umfassend ein flächiges, mit einer Vielzahl von Öffnungen versehenes, flexibles Substrat mit auf und in diesem Substrat befindlichen porösen Beschichtung, die anorganische Komponenten aufweist, welche dadurch gekennzeichnet ist, dass das Material des Substrates ausgewählt ist aus Vliesen von Polymer- oder Naturfasern, wobei die Vliese eine Porosität von mehr als 50 % sowie eine Dicke von 10 - 200 µm aufweisen und die Beschichtung eine poröse, keramische Beschichtung ist.

Außerdem ist Gegenstand der vorliegenden Erfindung ein Verfahren zur Herstellung einer erfindungsgemäßen Membran, welches dadurch gekennzeichnet ist, dass ein flächiges, mit einer Vielzahl von Öffnungen versehenes, flexibles Substrat in und auf diesem Substrat mit einer Beschichtung versehen wird, wobei das Material des Substrates ausgewählt ist aus Vliesen von Natur- oder Polymer fasern mit einer Dicke von 10 - 200 µm und eine Porosität von mehr als 50% und die Beschichtung eine poröse, keramische Beschichtung ist, die auf und in das Substrat durch Aufbringen einer Suspension, die zumindest, ein Oxid, der Metalle Al, Zr, Si, Sn, Ti und/oder Y und ein Sol aufweist, auf das Substrat und durch zumindest einmaliges Erwärmen, bei welchem die Suspension auf und im Träger verfestigt wird, aufgebracht wird.

Ebenso ist Gegenstand der vorliegenden Erfindung die Verwendung einer erfindungsgemäßen Membran als Separator in Batterien, als Träger für Ultrafiltrations-, Nanofiltrations-, Umkehrosmose-, Gastrenn- oder Pervaporationsmembranen oder als Mikrofiltrationsmembran.

Der Vorteil der erfindungsgemäßen Membranen liegt unter anderem darin, dass der transmembrane Fluss deutlich größer ist als bei herkömmlichen Membranen. So liegt die Steigerung des transmembranen Flusses gegenüber Membranen auf Basis von perforierten Polymerfolien bei ca. 150 %. Dies ist darauf zurückzuführen, dass die Vliesmaterialien bereits eine deutlich größere Porosität als die verwendeten Folien besitzen. Daher ist die offene Filterfläche der resultierenden Materialien auf Vliesen auch deutlich größer. Dies bewirkt durch die vergrößerte effektive Filtrationsfläche auch einen deutlichen Anstieg der Filtrationsleistung (also des Flusses).

Die erfindungsgemäßen Membranen sind außerdem deutlich haltbarer als bis jetzt erhältliche Membranen, insbesondere Kompositmembranen. Dies liegt vermutlich an der unregelmäßigen Struktur des als Träger verwendeten Vlieses. Bei der Verwendung von Geweben bilden sich in regelmäßigen Abständen entsprechend der Webung Knoten, also Stellen an denen die Fasern übereinanderliegen. Diese regelmäßigen Knoten bilden Bruch- oder Knickstellen, da an diesen Stellen die keramische Beschichtung nicht so dick ist wie zwischen den Knoten. Die Regelmäßigkeit der Knoten bei den Membranen auf Basis von Geweben kann dabei wie eine Perforation wirken und einen Riss der Membran an dieser Stelle bewirken. Durch die Verwendung von Vlies als Substrat bzw. Träger kann dieses Problem beseitigt werden, da im Vlies die Knoten nicht regelmäßig angeordnet sind.

Ein weiterer Vorteil der erfindungsgemäßen Polymervlies-geträgerten Membranen ist, dass sie sehr viel kostengünstiger sind als alternative Materialien, die für Hochflussmembranen eingesetzt werden könnten. So betragen die Kosten für ein Metallvlies ca. 1250 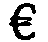 /m² die Kosten für ein Polymervlies hingegen weniger als 15 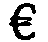 /m². Daher sind nun Verbundwerkstoffmembranen zugänglich, die so kostengünstig hergestellt werden können, dass diese neue Märkte erschließen, die zuvor aufgrund des hohen Preises nicht erreichbar waren. Diese Märkte liegen vor allem in der Filtration von Trink- und Abwasser, bei denen Membranen mit einem Preis von mehr als 500 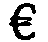 /m2 nicht einsetzbar sind.

Die erfindungsgemäße Membran wird im Folgenden beschrieben, ohne dass die Erfindung auf diese beschränkt sein soll.

Die erfindungsgemäße Membran, umfassend ein flächiges, mit einer Vielzahl von Öffnungen versehenes, flexibles Substrat mit auf und in diesem Substrat befindlichen porösen Beschichtung, die anorganische Komponenten aufweist, zeichnet sich dadurch aus, dass das Material des Substrates ausgewählt ist aus Vliesen von Polymer- oder Naturfasern, wobei die Vliese eine Porosität von mehr als 50 % sowie eine Dicke von 10 - 200 µm aufweisen und dass die Beschichtung eine poröse, keramische Beschichtung ist. Vorzugsweise weist das Substrat eine Porosität von 50 bis 97 % und besonders bevorzugt von 60 bis 90 % und ganz besonders bevorzugt von 70 bis 90 % auf. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen an Gewicht des betrachteten Vlieses und der Dichte der Polymerfasern. Die große Porosität des Substrates ermöglicht auch eine höhere Porosität der erfindungsgemäßen Membran, weshalb höhere transmembrane Flüsse mit der erfindungsgemäßen Membran erzielbar sind.

Es kann besonders vorteilhaft sein, wenn die erfindungsgemäße Membran ein Substrat aufweist, welches eine Dicke von 30 bis 100 µm, bevorzugt von 25 bis 50 µm und besonders bevorzugt von 30 bis 40 µm aufweist. Auch durch die geringe Dicke des eingesetzten Substrates wird erreicht, dass der transmembrane Fluss durch die Membran größer ist als bei herkömmlichen Membranen.

Die Polymerfasern sind bevorzugt ausgewählt aus Polyacrylnitril, Polyamiden, Polyimiden, Polyacrylaten, Polytetrafluorethylen, Polyester, wie z. B. Polyethylenterephthalat und/oder Polyolefinen, wie z. B. Polypropylen, Polyethylen oder Mischungen dieser Polymere. Aber auch alle anderen bekannten Polymerfasern und viele Naturfasern, wie z. B. Flachsfasern, Baumwolle oder Hanffasern sind denkbar. Bevorzugt weist die erfindungsgemäße Membran Polymerfasern auf, die eine Erweichungstemperatur von größer 100 °C und eine Schmelztemperatur von größer 110 °C aufweisen. Bei Polymerfasern mit niedrigeren Temperaturgrenzen verkleinern sich auch die Anwendungsgebiete. Bevorzugte Membrane sind bis zu einer Temperatur von bis zu 150 °C, vorzugsweise bis zu einer Temperatur von 120 bis 150 °C und ganz besonders bevorzugt bis zu einer Temperatur von 121 °C einsetzbar. Es kann vorteilhaft sein, wenn die Polymerfasern einen Durchmesser von 1 bis 25 µm, vorzugsweise von 2 bis 15 µm aufweisen. Sind die Polymerfasern deutlich dicker als die genannten Bereiche, leidet die Flexibilität des Substrates und damit auch die der Membran.

Im Sinne der vorliegenden Erfindung werden unter Polymerfasern auch Fasern von Polymeren verstanden, die durch eine thermische Behandlung chemisch oder strukturell teilweise verändert wurden, wie z. B. teilweise karbonisierte Polymerfasern.

Die auf und in dem Substrat befindliche keramische Beschichtung weist bevorzugt ein Oxid, der Metalle Al, Zr, Si, Sn, Ti und/oder Y, auf. Besonders bevorzugt weist die auf und in dem Substrat befindliche Beschichtung ein Oxid der Metalle Al, Zr, Ti und/oder Si, als anorganische Komponente auf.

Es kann vorteilhaft sein, wenn die keramische Beschichtung bzw. die anorganischen Komponenten, die die Beschichtung ausmachen über Haftvermittler an das Substrat, insbesondere die Polymerfasern gebunden sind. Typische Haftvermittler sind organofunktionelle Silane, wie sie beispielsweise von der Fa. Degussa unter dem Handelsnamen "Dynasilan" angeboten werden, aber auch reine Oxide wie ZrO₂, TiO₂, SiO₂ oder Al₂O₃ können für einige Fasermaterialien geeignete Haftvermittler sein. Je nach Herstellungsbedingungen und verwendetem Haftvermittler können die Haftvermittler in der erfindungsgemäßen Membran noch nachweisbar vorhanden sein.

Es kann vorteilhaft sein, wenn das Vlies oder Gewebe zuerst mit einem Haftvermittler vorbeschichtet wurde. Entsprechend weist dann eine solche Membran im Innern ein Vlies, vorzugsweise ein Polymervlies auf, dessen Fasern mit einer dünnen Schicht eines Haftvermittlers (wie. z. B. einem Metalloxid oder einer Organosilanverbindung) ausgestattet sind. Im und auf dem polymeren, vorbeschichteten Träger befindet sich das poröse Keramikmaterial.

Vorzugsweise liegt in der Beschichtung zumindest eine anorganische Komponente in einer Komgrößenfraktion mit einer mittleren Korngröße von 1 bis 250 nm oder mit einer mittleren Korngröße von 251 bis 10000 nm oder 1000 bis 10000 nm, besonders bevorzugt von 250 bis 1750 nm vor. Es kann vorteilhaft sein, wenn die erfindungsgemäße Membran eine Beschichtung aufweist, die zumindest zwei Korngrößenfraktionen zumindest einer anorganischen Komponente aufweist. Ebenso kann es vorteilhaft sein, wenn die Beschichtung zumindest zwei Korngrößenfraktionen von zumindest zwei anorganischen Komponenten aufweist. Das Korngrößenverhältnis kann von 1 : 1 bis 1 : 10000, vorzugsweise von 1 : 1 bis 1 : 100 betragen. Das Mengenverhältnis der Korngrößenfraktionen im Verbundwerkstoff kann vorzugsweise von 0,01 : 1 bis 1 : 0,01 betragen.

Die Stoffdurchlässigkeit und die Porosität und damit auch der transmembrane Fluss der erfindungsgemäßen Membran wird auch durch die Korngröße der verwendeten anorganischen Komponenten begrenzt.

Bevorzugt weist die erfindungsgemäße Membran eine Porosität von 10 % bis 70 %, bevorzugt von 20 % bis 60 % und besonders bevorzugt von 30 % bis 50 % auf. Die Porosität bezieht sich dabei auf die erreichbaren, also offenen Poren. Die Porosität kann dabei mittels der bekannten Methode der Quecksilberporosimetrie bestimmt werden oder kann aus dem Volumen und der Dichte der verwendeten Einsatzstoffe errechnet werden, wenn davon ausgegangen wird, dass nur offene Poren vorliegen. Die mittlere Porenweite der erfindungsgemäßen Membran beträgt bevorzugt von 10 bis 2000 nm, ganz besonders bevorzugt von 50 bis 800 nm.

Die erfindungsgemäßen Membranen zeichnen sich dadurch aus, dass sie eine Zugfestigkeit von mindestens 1 N/cm, vorzugsweise von 3 N/cm und ganz besonders bevorzugt von größer 6 N/cm aufweisen. Die erfindungsgemäßen Membranen sind vorzugsweise flexibel und lassen sich vorzugsweise ohne Beschädigung bis auf jeden Radius bis herab zu 100 m, vorzugsweise bis herab zu 50 mm und ganz besonders bevorzugt bis herab zu 2 mm biegen. Die gute Biegbarkeit der erfindungsgemäßen Membran hat den Vorteil, dass beim Einsatz in der Mikrofiltration plötzliche Druckschwankungen durch die Membran problemlos vertragen werden können, ohne dass die Membran beschädigt wird.

Die erfindungsgemäße Membran ist vorzugsweise erhältlich durch ein Verfahren zur Herstellung einer Membran, welches dadurch gekennzeichnet ist, dass ein flächiges, mit einer Vielzahl von Öffnungen versehenes, flexibles Substrat in und auf diesem Substrat mit einer Beschichtung versehen wird, wobei das Material des Substrates ausgewählt ist aus Vliesen von Polymer- oder Naturfasern, wobei die Vliese eine Porosität von größer 50 % aufweisen und die Beschichtung eine poröse, keramische Beschichtung ist, die auf das Substrat durch Aufbringen einer Suspension, die zumindest, ein Oxid, der Metalle Al, Zr, Si, Sn, Ti und/oder Y und ein Sol aufweist, auf das Substrat und durch zumindest einmaliges Erwärmen, bei welchem die Suspension auf und im Substrat verfestigt wird, aufgebracht wird. Die Suspension kann weitere anorganische Komponenten aufweisen, insbesondere solche, wie sie oben bereits als anorganische Komponenten beschrieben wurden.

Die Suspension kann z. B. durch Aufdrucken, Aufpressen, Einpressen Aufrollen, Aufrakeln, Aufstreichen, Tauchen, Spritzen oder Aufgießen auf und in das Substrat gebracht werden.

Das Material des Substrates ist ausgewählt aus Vliesen von Polymerfasern mit einer Dicke von 10 bis 200 µm. Es kann besonders vorteilhaft sein, wenn die erfindungsgemäße Membran ein Substrat aufweist, welches eine Dicke von 30 bis 100 µm, bevorzugt von 25 bis 50 µm aufweist.

Die Polymerfasern sind bevorzugt ausgewählt aus Polyacrylnitril, Polyamiden, Polyimiden, Polyacrylaten, Polytetrafluorethylen, Polyester, wie z. B. Polyethylenterephthalat und/oder Polyolefinen. Aber auch alle anderen bekannten Polymerfasern und viele Naturfasern sind einsetzbar. Bevorzugt weist die erfindungsgemäße Membran Polymerfasern auf, die eine Erweichungstemperatur von größer 100 °C und eine Schmelztemperatur von größer 110 °C aufweisen. Bei Polymerfasern mit niedrigeren Temperaturgrenzen verkleinern sich auch die Anwendungsgebiete. Bevorzugte Membranen sind bis zu einer Temperatur von bis zu 150 °C, vorzugsweise bis zu einer Temperatur von 120 bis 150 °C und ganz besonders bevorzugt bis zu einer Temperatur von 121 °C einsetzbar. Es kann vorteilhaft sein, wenn die Polymerfasern einen Durchmesser von 1 bis 25 µm, vorzugsweise von 2 bis 15 µm aufweisen. Sind die Polymerfasern deutlich dicker als die genannten Bereiche, leidet die Flexibilität des Substrates und damit auch die der Membran.

Die zur Herstellung der Beschichtung verwendete Suspension weist vorzugsweise zumindest ein anorganisches Oxid des Aluminiums, Titans, Siliziums und/oder Zirkoniums und zumindest ein Sol, zumindest ein Halbmetalloxidsol oder zumindest ein Mischmetalloxidsol oder eine Mischung dieser Sole auf, und wird durch Suspendieren zumindest einer anorganischen Komponente in zumindest einem dieser Sole hergestellt.

Die Sole werden durch Hydrolisieren zumindest einer Verbindung, vorzugsweise zumindest einer Metallverbindung, zumindest einer Halbmetallverbindung oder zumindest einer Mischmetallverbindung erhalten. Als zu hydrolysierende Verbindung wird vorzugsweise zumindest ein Metallnitrat, ein Metallchlorid, ein Metallcarbonat, eine Metallalkoholatverbindung oder zumindest eine Halbmetallalkoholatverbindung, besonders bevorzugt zumindest eine Metallalkoholatverbindung hydrolisiert. Als Metallalkoholatverbindung oder Halbmetallalkoholatverbindung wird vorzugsweise eine Alkoholatverbindung der Elemente Zr, Al, Si, Ti, Sn, und Y oder zumindest ein Metallnitrat, Metallcarbonat oder Metallhalogenid ausgewählt aus den Metallsalzen der Elemente Zr, Al, Ti, Si, Sn, und Y als Metallverbindung hydrolisiert. Die Hydrolyse erfolgt vorzugsweise in Gegenwart von Wasser, Wasserdampf, Eis, oder einer Säure oder eine Kombination dieser Verbindungen.

In einer Ausführungsvariante des erfindungsgemäßen Verfahrens werden durch Hydrolyse der zu hydrolisierenden Verbindungen partikuläre Sole hergestellt. Diese partikulären Sole zeichnen sich dadurch aus, dass die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolisierte Verbindung kann zum Peptisieren mit zumindest einer organischen oder anorganischen Säure, vorzugsweise mit einer 10 bis 60%igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden. Die so hergestellten partikulären Sole können anschließend zur Herstellung von Suspensionen eingesetzt werden, wobei die Herstellung von Suspensionen zum Aufbringen auf Naturfaservliesen bzw. mit polymeren Sol vorbehandelten Polymerfaservliesen bevorzugt ist.

In einer weiteren Ausführungsvariante des erfindungsgemäßen Verfahrens werden durch Hydrolyse der zu hydrolisierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vemetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen wird die Hydrolyse vorzugsweise so durchgeführt, dass die zu hydrolisierende Verbindung mit dem 0,5 bis 10-fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10-fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5-fache Menge an Wasser eingesetzt wird. Eine Hydrolyse mit weniger als der bevorzugten Menge an Wasser, Wasserdampf, oder Eis führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser polymeren Sole mit dem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der erfindungsgemäßen Suspension oder als Haftvermittler in einem Vorbehandlungsschritt eingesetzt werden.

Sowohl die partikulären Sole als auch die polymeren Sole können als Sol in dem erfindungsgemäßen Verfahren zur Herstellung der Suspension eingesetzt werden. Neben den Solen, die wie gerade beschrieben erhältlich sind, können prinzipiell auch handelsübliche Sole, wie z. B. Zirkonnitratsol oder Silicasol eingesetzt werden. Das Verfahren der Herstellung von Membranen durch Aufbringen und Verfestigen einer Suspension auf einen Träger an und für sich ist aus WO 99/15262 bekannt, jedoch lassen sich nicht alle Parameter bzw. Einsatzstoffe, auf die Herstellung der erfindungsgemäßen Membran übertragen. Der Prozess, der in WO 99/15262 beschrieben wird, ist in dieser Form insbesondere nicht ohne Abstriche auf polymere Vliesmaterialien übertragbar, da die dort beschriebenen sehr wasserhaltigen Solsysteme, häufig keine durchgängige Benetzung der üblicherweise hydrophoben Polymer-vliese in der Tiefe ermöglichen, da die sehr wasserhaltigen Solsysteme die meisten Polymer-vliese nicht oder nur schlecht benetzen. Es wurde festgestellt, dass selbst kleinste unbenetzte Stellen im Vliesmaterial dazu führen können, dass Membranen erhalten werden, die Fehler aufweisen und damit unbrauchbar sind.

Es wurde nun überraschenderweise gefunden, dass ein Solsystem bzw. eine Suspension, welches bzw. welche im Benetzungsverhalten den Polymeren angepasst wurde, die Vliesmaterialien vollständig durchtränkt und somit fehlerfreie Beschichtungen erhältlich sind. Bevorzugt erfolgt bei dem erfindungsgemäßen Verfahren deshalb eine Anpassung des Benetzungsverhaltens des Sols bzw. der Suspension. Diese Anpassung erfolgt vorzugsweise durch die Herstellung von polymeren Solen bzw. Suspensionen aus polymeren Solen wobei diese Sole einen oder mehrere Alkohole, wie z. B. Methanol, Ethanol oder Propanol oder Mischungen, die einen oder mehrere Alkohole sowie, vorzugsweise aliphatische Kohlenwasserstoffe aufweisen, umfassen. Es sind aber auch andere Lösemittelgemische denkbar, die dem Sol bzw. der Suspension zugegeben werden können, um diese im Benetzungsverhalten an das verwendete Substart anzupassen.

Es wurde festgestellt, dass die grundlegende Änderung des Solsystems und der daraus resultierenden Suspension zu einer deutlichen Verbesserung der Haftungseigenschaften der keramischen Komponenten auf dem und in einem polymeren Vliesmaterial führt. Solche guten Haftfestigkeiten sind mit partikulären Solsystemen normalerweise nicht erhältlich. Vorzugsweise werden deshalb Substrate, die Polymerfasern aufweisen, mittels Suspensionen beschichtet, die auf polymeren Solen basieren oder in einem vorgeschalteten Schritt durch Behandlung mit einem polymeren Sol mit einem Haftvermittler ausgerüstet wurden.

Es kann vorteilhaft sein, wenn zur Herstellung der Suspension als anorganische Komponente, zumindest ein Oxid, ausgewählt aus den Oxiden der Elemente Y, Zr, Al, Si, Sn, und Ti, in einem Sol suspendiert wird. Vorzugsweise wird eine anorganische Komponente, die zumindest eine Verbindung, ausgewählt aus Aluminiumoxid, Titandioxid, Zirkonoxid und/oder Siliziumdioxid, suspendiert. Vorzugsweise beträgt der Massenanteil der suspendierten Komponente das 0,1 bis 500-fache, besonders bevorzugt das 1 bis 50-fache und ganz besonders bevorzugt das 5 bis 25-fache des eingesetzten Sols.

Es kann vorteilhaft sein, wenn zumindest eine anorganische Komponente, welche eine mittlere Korngröße von 1 bis 10000 nm, vorzugsweise von 1 bis 10 nm, 10 bis 100 nm, 100 bis 1000 nm oder 1000 bis 10000 nm, besonders bevorzugt von 250 bis 1750 nm und ganz besonders bevorzugt von 300 bis 1250 nm aufweist, in zumindest einem Sol suspendiert wird. Durch die Verwendung von anorganischen Komponenten, die eine mittlere Korngröße von 250 bis 1250 nm aufweisen, wird eine besonders gut geeignete Biegsamkeit und Porosität der Membran erreicht.

Zur Verbesserung der Haftung der anorganischen Komponenten an Polymerfasern als Substrat kann es vorteilhaft sein, den eingesetzten Suspensionen Haftvermittler, wie z. B. organofunktionelle Silane oder auch reine Oxide wie ZrO₂, TiO₂, SiO₂ oder Al₂O₃ beizufügen. Wobei das Beifügen der Haftvermittler insbesondere zu Suspensionen auf Basis von polymeren Solen bevorzugt ist. Als Haftvermittler sind insbesondere Verbindungen, ausgewählt aus den Octylsilanen, den fluorierten Octylsilanen, den Vinylsilanen, den aminfunktionalisierten Silanen und/oder den Glycidyl-funktionalisierten Silanen, wie z. B. die Dynasilane der Fa. Degussa einsetzbar. Besonders bevorzugte Haftvermittler für Polytetrafluorethylen (PTFE) sind z. B. Fluorierte Octylsilane, für Polyethylen (PE) und Polypropylen (PP) sind es Vinyl-, Methyl- und Octylsilane, wobei eine ausschließliche Verwendung von Methylsilanen nicht optimal ist, für Polyamide und Polyamine sind es Aminfunktionelle Silane, für Polyacrylate und Polyester sind es Glycidyl-funktionalisierte Silane und für Polyacrylnitril kann man auch Glycidylfunktionalisierte Silane einsetzen. Auch andere Haftvermittler sind einsetzbar, die aber auf die jeweiligen Polymere abgestimmt sein müssen. Der in WO 99/15262 beschriebene Zusatz von Methyltriethoxysilan zum Solsystem bei der Beschichtung von polymeren Trägermaterialien ist eine vergleichsweise schlechte Lösung des Problems der Haftfestigkeit von Keramik auf Polymerfasern. Zudem ist die Trocknungsdauer von 30 bis 120 Min. bei 60 bis 100 °C bei den beschriebenen Solsystemen nicht ausreichend um hydrolysebeständige keramische Materialien zu erhalten. Das heißt diese Materialien werden sich bei längerer Lagerung in wasserhaltigen Medien auflösen bzw. sie werden beschädigt werden. Andererseits würde die in WO 99/15262 beschriebene Temperaturbehandlung von über 350 °C zu einem Verbrennen des hier verwendeten Polymervlieses und damit zur Zerstörung der Membran führen. Die Haftvermittler müssen also so ausgewählt werden, dass die Verfestigungs-temperatur unterhalb des Schmelz- oder Erweichungspunktes des Polymeren und unterhalb dessen Zersetzungstemperatur liegt. Bevorzugt weisen erfindungsgemäße Suspensionen deutlich weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m² g⁻¹) erhalten werden, wobei der spezifische Platzbedarf häufig in der Größenordnung von 300 bis 400 m² g⁻¹ liegt.

Die folgende Tabelle enthält einen beispielhaften Überblick über einsetzbare Haftvermittler auf Basis von organofunktionellen Si-Verbindungen für typische als Vliesmaterial verwendete Polymere.

| Polymer | Organofunktionstyp | Haftvermittler |
|---|---|---|
| PAN | Glycidyl | GLYMO |
| | Methacryl | MEMO |
| PA | Amino | AMEO, DAMO |
| PET | Methacryl | MEMO |
| | Vinyl | VTMO, VTEO, VTMOEO |
| PE, PP | Amino | AMEO, AMMO |
| | Vinyl | VTMO, VTEO, Silfin |
| | Methacryl | MEMO |
| Mit: | | |
| AMEO = 3-Aminopropyltriethoxysilan | | |
| DAMO = 2-Aminoethyl-3-aminopropyltrimethoxysilan | | |
| GLYMO = 3-Glycidyloxytrimethoxysilan | | |
| MEMO = 3-methacryloxypropyltrimethoxysilan | | |
| Silfin = Vinylsilan + Initiator + Katalysator | | |
| VTEO = Vinyltriethoxysilan | | |
| VTMO = Vinyltrimethoxysilan | | |
| VTMOEO = Vinyltris(2-methoxyethoxy)silan | | |

Die erfindungsgemäßen Beschichtungen werden durch Verfestigen der Suspension in und auf dem Substrat auf das Substrat aufgebracht. Erfindungsgemäß kann die auf und im Substrat vorhandene Suspension durch Erwärmen auf 50 bis 350 °C verfestigt werden. Da bei der Verwendung polymerer Substratmaterialien die maximal Temperatur durch das Substrat vorgegeben wird, ist diese entsprechend anzupassen. So wird je nach Ausführungsvariante des erfindungsgemäßen Verfahrens die auf und im Substrat vorhandene Suspension durch Erwärmen auf 100 bis 350 °C und ganz besonders bevorzugt durch Erwärmen auf 110 bis 280 °C verfestigt. Es kann vorteilhaft sein, wenn das Erwärmen für 1 Sekunde bis 60 Minuten bei einer Temperatur von 100 bis 350 °C erfolgt. Besonders bevorzugt erfolgt das Erwärmen der Suspension zum Verfestigen auf eine Temperatur von 110 bis 300 °C, ganz besonders bevorzugt bei einer Temperatur von 110 bis 280 °C und vorzugsweise für 0,5 bis 10 Min.

Bei der Verfestigung der Membran kann es je nach gewählter Temperaturhöhe bei einigen Polymermaterialien unter dem Temperatureinfluss zu Veränderungen in der chemischen Struktur kommen, so dass anschließend die Polymere nicht mehr in ihrem Ausgangszustand bzw. -modifikation vorliegen. So kann es zu einer teilweisen Karbonisierung von Polyimiden oder zur Bildung sogenannter Leiterpolymere bei Polyacrylnitril mit nachfolgender teilweiser Karbonisierung kommen. Diese Effekte führen immer zu einer Veränderung der Eigenschaften der Trägerwerkstoffe. Dies kann je nach Anwendung auch speziell beabsichtigt werden, da dadurch beispielsweise die Lösemittel-, Säure- und Laugebeständigkeit erhöht werden kann. Der Grad der Umwandlung kann dabei über Temperatur und Zeit beeinflusst werden.

Das erfindungsgemäße Erwärmen des Verbundes kann mittels erwärmter Luft, Heißluft, Infrarotstrahlung oder durch andere Erwärmungsmethoden nach dem Stand der Technik erfolgen.

In einer besonderen Ausführungsform des erfindungsgemäßen Verfahrens werden die oben genannten Haftvermittler in einem vorgeschalteten Schritt auf das Substrat, insbesondere das Polymervlies aufgebracht. Hierzu werden diese in einem geeigneten Lösemittel, wie z. B. Ethanol gelöst. Diese Lösung kann auch noch eine geringe Menge an Wasser, vorzugsweise die 0,5 bis 10-fache Menge bezogen auf die molare Menge der hydrolysierbaren Gruppe, und kleine Mengen einer Säure, wie z. B. HCl oder HNO₃, als Katalysator für die Hydrolyse und Kondensation der Si-OR-Gruppen enthalten. Durch die bekannten Techniken, wie z. B. Aufsprühen, Aufdrucken, Aufpressen, Einpressen Aufrollen, Aufrakeln, Aufstreichen, Tauchen, Spritzen oder Aufgießen wird diese Lösung auf das Substrat aufgebracht und der Haftvermittler durch eine Temperaturbehandlung bei 50 bis maximal 350 °C auf dem Substrat fixiert. Erst nach dem Aufbringen des Haftvermittlers erfolgt bei dieser Ausführungsvariante des erfindungsgemäßen Verfahrens das Aufbringen und Verfestigen der Suspension.

In einer anderen Ausführungsvariante des erfindungsgemäßen Verfahrens werden haftvermittelnde Schichten in einem Vorbehandlungsschritt, bei dem ein polymeres Sol, aufgebracht und verfestigt wird, aufgebracht. Das Aufbringen und Verfestigen des polymeren Sols erfolgt vorzugsweise auf dieselbe Weise wie das Aufbringen und Verfestigen der Suspensionen. Durch das Aufbringen dieser polymeren Sole werden die Substrate, insbesondere die Polymervliese mit einem Oxid von Al, Ti, Zr oder Si als Haftvermittler ausgerüstet, wodurch das Substrat hydrophil ausgestattet wird. So ausgerüstete Substrate können dann nach dem in WO 99/15262 beschriebenen Stand der Technik bzw. wie oben beschrieben mit einer porösen Beschichtung ausgerüstet werden, wobei durch die Vorbehandlung eine deutlich bessere Haftung der Beschichtung, insbesondere auf Polymervliesen beobachtet werden kann.

Ein typisches polymeres Sol für eine Vorbehandlung stellt etwa eine 2 bis 10 Gew.-%ige alkoholische Lösung eines Metallalkoholats (wie z. B. Titanethylat oder Zirkoniumpropylat) dar, das noch zusätzlich 0,5 bis 10 mol-Anteile Wasser sowie geringe Mengen einer Säure als Katalysator enthalten kann. Nach Aufbringen eines solchen Sols auf das Substrat werden die Substrate, vorzugsweise Polymervliese bei einer Temperatur von maximal 350 °C behandelt. Dabei entsteht ein dichter Film aus einem Metalloxid um die Substratfasern herum, wodurch eine Infiltration des Substrates mit einer Suspension bzw. einem Schlicker auf Basis eines kommerziellen Zirkonnitratsols oder Silicasols ohne Benetzungsschwierigkeiten möglich ist.

Da polymere Sole eher dichte Filme bilden als partikuläre und die partikulären Sole zudem immer größere Mengen an Wasser im Porengefüge der Zwischenkornvolumina besitzen, ist es einfacher polymere Sole zu trocknen als partikulärer Sole. Trotzdem müssen die Membranen bei Temperaturen von über 150 °C getrocknet werden, damit das keramische Material eine genügend gute Haftfestigkeit auf dem Träger erhält. Besonders gute Haftfestigkeiten lassen sich bei einer Temperatur von mindesten 200 °C und ganz besonders gute Festigkeiten bei einer Temperatur von mindestens 250 °C erzielen. Allerdings sind hierfür dann entsprechend temperaturstabile Polymere zwingend erforderlich, wie etwa Polyethylenterephthalat (PET), Polyacrylnitril (PAN), Polytetrafluorethylen (PTFE), Polyvinylidenfluorid (PVDF) oder Polyamid (PA). Ist der Träger nicht genügend temperaturstabil, so kann durch eine Vortrocknung bei geringeren Temperatur (bis 100 °C) zunächst eine Vorverfestigung der Membran erfolgen. Bei der Nachverfestigung bei erhöhter Temperatur wirkt dann die Keramikschicht als Stütze für den Support, so dass es nicht mehr zu einem Wegschmelzen des Substrates kommen kann. Diese Verfahrensparameter gelten nicht nur für das Aufbringen und Verfestigen eines polymeren Sols z. B. als Haftvermittler sondern auch für das Aufbringen und Verfestigen von Suspensionen auf Basis von polymeren Solen.

Durch beide Ausführungsarten des Aufbringens eines Haftvermittlers vor dem eigentlichen Aufbringen der Suspension kann das Haftverhalten der Substrate insbesondere gegenüber wässrigen, partikulären Solen verbessert werden, weshalb insbesondere so vorbehandelte Substrate mit Suspensionen auf Basis von handelsüblichen Solen, wie z. B. Zirkonnitratsol oder Silicasol erfindungsgemäß beschichtet werden können. Diese Vorgehensweise des Aufbringens eines Haftvermittlers bedeutet aber auch, dass das Herstellverfahren der erfindungsgemäßen Membran um einen Zwischen- bzw. Vorbehandlungsschritt erweitert werden muss. Dies ist machbar allerdings auch aufwendiger als die Verwendung von angepassten Solen denen Haftvermittler beigegeben wurden, hat aber auch den Vorteil, dass auch beim Einsatz von Suspensionen auf Basis von handelsüblichen Solen bessere Ergebnisse erzielt werden.

Das erfindungsgemäße Verfahren kann z. B. so durchgeführt werden, dass das Substrat von einer Rolle abgerollt wird, mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min durch zumindest eine Apparatur, welche die Suspension auf und in den Support bringt, wie z. B. eine Walze und zumindest eine weitere Apparatur, welche das Verfestigen der Suspension auf und in dem Support durch Erwärmen ermöglicht, wie z. B. eine elektrisch beheizter Ofen, durchläuft und die so hergestellte Membran auf einer zweiten Rolle aufgerollt wird. Auf diese Weise ist es möglich, die erfindungsgemäße Membran im Durchlaufverfahren herzustellen. Auch die Vorbehandlungsschritte können im Durchlaufverfahren unter Beibehaltung der genannten Parameter durchgeführt werden.

Die erfindungsgemäßen Membranen können als Separator in Batterien, als Träger für Ultrafiltrations-, Nanofiltrations-, Umkehrosmose-, Gastrenn- oder Pervaporationsmembranen oder einfach als Mikrofiltrationsmembran verwendet werden.

Die vorliegende Erfindung wird durch die nachfolgenden Beispiele 1,2 und 4-8 beschrieben, ohne darauf beschränkt zu sein.

### Beispiel 1: Herstellung einer S450PET

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO (Degussa AG) gegeben. In diesem Sol, das zunächst für einige Stunden gerührt wurde, werden dann jeweils 125 g der Aluminiumoxide Martoxid MZS-1 und Martoxid MZS-3 (Hersteller: Martinswerke) suspendiert. Diese Suspension (Schlicker) wird für mindestens weitere 24 h mit einem Magnetrührer homogenisiert, wobei das Rührgefäß abgedeckt werden muss, damit es nicht zu einem Verlust an Lösemittel kommt.

Ein PET-Vlies mit einer Dicke von ca. 30 µm und einem Flächengewicht von etwa 20 g/m2 wird damit in einem kontinuierlichen Aufwalzverfahren (Bandgeschwindigkeit ca. 8 m/h, T = 200 °C) mit diesem Schlicker beschichtet. Bei diesem Aufwalzverfahren wird der Schlicker mit einer Walze, die sich gegenläufig zur Bandrichtung (Bewegungsrichtung des Vlieses) bewegt auf das Vlies aufgewalzt. Das Vlies läuft anschließend durch einen Ofen, der die angegebene Temperatur aufweist. In den nachfolgenden Versuchen wird die gleiche Methode bzw. Anordnung verwendet. Man erhält am Ende eine Mikrofiltrationsmembran mit einer mittleren Porenweite von 450 nm.

### Beispiel 2: Herstellung einer S240PAN

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO gegeben. In diesem Sol, das zunächst für einige Stunden gerührt wurde, werden dann 280 g des Aluminiumoxids AlCoA CT1200 SG suspendiert. Dieser Schlicker (Suspension) wird für mindestens weitere 24 h mit einem Magnetrührer homogenisiert, wobei das Rührgefäß abgedeckt werden muss, damit es nicht zu einem Lösemittelverlust kommt.

Ein PAN-Vlies (Viledon 1773, Firma Freudenberg) mit einer Dicke von etwa 100 µm und einem Flächengewicht von 22 g/m² wird damit in einem kontinuierlichen Aufwalzverfahren (Bandgeschwindigkeit ca. 8 m/h, T = 250 °C) mit diesem Schlicker beschichtet. Man erhält am Ende eine Mikrofiltrationsmembran mit einer mittleren Porenweite von 240 nm.

### Vergleichsbeispiel 3: Herstellung einer S450PO

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO gegeben. In diesem Sol, das zunächst für einige Stunden gerührt wurde, werden dann jeweils 125 g der Aluminiumoxide Martoxid MZS-1 und Martoxid MZS-3 suspendiert. Diese Suspension wird für mindestens weitere 24 h mit einem Magnetrührer homogenisiert, wobei das Rührgefäß abgedeckt werden muss, damit es nicht zu einem Lösemittelverlust kommt.

Ein Polyolefin-Vlies aus Polyethylen- und Polypropylenfasem (FS 2202-03, Firma Freudenberg) mit einer Dicke von etwa 30 µm wird in einem kontinuierlichen Aufwalzverfahren (Bandgeschwindigkeit ca. 8 m/h, T = 110 °C) mit obiger Suspension beschichtet. Man erhält am Ende eine Mikrofiltrationsmembran mit einer mittleren Porenweite von 450 nm.

### Beispiel 4: Herstellung einer S100PET

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO gegeben. In diesem Sol, das zunächst für einige Stunden weiter gerührt wurde, werden dann 280 g des Aluminiumoxids AlCoA CT3000 suspendiert. Diese Suspension wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 30 µm und einem Flächengewicht von etwa 20 g/m2 wird damit in einem kontinuierlichen Aufwalzverfahren (Bandgeschwindigkeit ca. 8 m/h, T = 200 °C) mit obiger Suspension beschichtet. Man erhält am Ende eine Mikrofiltrationsmembran mit einer mittleren Porenweite von 100 nm.

### Beispiel 5: Herstellung einer S100PAN

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO gegeben. In diesem Sol, das zunächst für einige Stunden weiter gerührt wurde, werden dann 300 g des Aluminiumoxids AlCoA CT3000 suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PAN-Vlies (Viledon 1773, Firma Freudenberg) mit einer Dicke von etwa 100 µm und einem Flächengewicht von 22 g/m² wird damit in einem kontinuierlichen Aufwalzverfahren (Bandgeschwindigkeit ca. 8 m/h, T = 250 °C) mit obigem Schlicker beschichtet. Man erhält am Ende eine Mikrofiltrationsmembran mit einer mittleren Porenweite von 100 nm.

### Beispiel 6: Herstellung einer S450PAN

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan MEMO gegeben. In diesem Sol, das zunächst für einige Stunden gerührt wurde, werden dann jeweils 140 g der Aluminiumoxide Martoxid MZS-1 und Martoxid MZS-3 suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PAN-Vlies (Viledon 1773, Firma Freudenberg) mit einer Dicke von etwa 100 µm und einem Flächengewicht von 22 g/m² wird damit in einem kontinuierlichen Aufwalzverfahren (Bandgeschwindigkeit ca. 8 m/h, T = 250 °C) mit obigem Schlicker beschichtet. Man erhält am Ende eine Mikrofiltrationsmembran mit einer mittleren Porenweite von 450 nm, die eine verbesserte Haftfestigkeit als im Beispiel 2 beschrieben aufweist.

### Beispiel 7: Herstellung einer S450PET

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan MEMO gegeben. In diesem Sol, das zunächst für einige Stunden gerührt wurde, werden dann jeweils 130 g der Aluminiumoxide Martoxid MZS-1 und Martoxid MZS-3 suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 30 µm und einem Flächengewicht von etwa 20 g/m2 wird damit in einem kontinuierlichen Aufwalzverfahren (Bandgeschwindigkeit ca. 8 m/h, T = 200 °C) mit obigem Schlicker beschichtet. Man erhält am Ende eine Mikrofiltrationsmembran mit einer mittleren Porenweite von 450 nm, die eine verbesserte Haftfestigkeit als im Beispiel 1 beschrieben aufweist.

### Beispiel 8: Herstellung einer Z450PAN

10 g einer 70 Gew.-%igen Lösung von Zirkoniumpropylat in Propanol werden in 340 g Propanol gelöst. Zu dieser Lösung gibt man unter kräftigem Rühren 0,72 g Wasser und 0,04 g konzentrierte Salzsäure. Dieses Sol wird für einige Stunden weiter gerührt. Ein PAN-Vlies (Viledon 1773, Firma Freudenberg) mit einer Dicke von etwa 100 µm und einem Flächengewicht von 22 g/m² wird damit in einem kontinuierlichen Aufwalzverfahren (Bandgeschwindigkeit ca. 8 m/h, T = 200 °C) mit diesem Sol beschichtet.

In einem Gemisch aus 150 g entionisiertem Wasser und 22,5 g Ethanol werden 1,4 g Zirkoniumacetylacetonat gelöst. In dieser Lösung werden jeweils 140 g MZS-1 und MZS-3 suspendiert und der Schlicker mindestens 24 h gerührt. Etwa 1 Stunde vor der Beschichtung werden nochmals 75 g eines kommerziellen 30 Gew.-%igen Zirkoniumnitratsols (MEL Chemicals) dem Schlicker zugefügt. Das vorbeschichtete PAN-Vlies wird dann in einem zweiten kontinuierlichen Aufwalzverfahren (Bandgeschwindigkeit ca. 8 m/h, T = 250 °C) mit diesem Schlicker beschichtet. Man erhält am Ende eine Mikrofiltrationsmembran mit einer mittleren Porenweite von 450 nm, die eine sehr gute Haftfestigkeit aufweist und sehr beständig auch in sehr alkalischen Medien ist (pH > 10).

## Patentansprüche

1. Membran, umfassend ein flächiges, mit einer Vielzahl von Öffnungen versehenes, flexibles Substrat mit einer auf und in diesem Substrat befindlichen porösen Beschichtung, die anorganische Komponenten aufweist,
**dadurch gekennzeichnet,**
**dass** das Material des Substrates ausgewählt ist aus Vliesen von Polymer- oder Naturfasern, wobei die Vliese eine Porosität von mehr als 50 % aufweisen, das Substrat eine Dicke von 10 bis 200 µm aufweist und die Beschichtung eine poröse, keramische Beschichtung ist.

2. Membran gemäß Anspruch 1,
**dadurch gekennzeichnet,**
**dass** die Polymerfasern, ausgewählt aus Polyacrylnitril, Polyamiden, Polyimiden, Polyacrylaten, Polytetrafluorethylen, Polyester und/oder Polyolefin sind.

3. Membran gemäß einem der Ansprüche 1 oder 2,
**dadurch gekennzeichnet,**
**dass** die Polymerfasern einen Durchmesser von 1 bis 25 µm aufweisen.

4. Membran gemäß einem der Ansprüche 1 bis 3,
**dadurch gekennzeichnet,**
**dass** die Porosität des Substrates von mehr als 50 bis 97 % beträgt.

5. Membran gemäß zumindest einem der Ansprüche 1 bis 4,
**dadurch gekennzeichnet,**
**dass** die auf und in dem Substrat befindliche Beschichtung ein Oxid der Metalle Al, Zr, Si, Ti und/oder Y, aufweist.

6. Membran gemäß einem der Ansprüche 1 bis 5,
**dadurch gekennzeichnet,**
**dass** die Membran eine Porosität von 10 bis 70 % aufweist..

7. Membran gemäß zumindest einem der Ansprüche 1 bis 6,
**dadurch gekennzeichnet,**
**dass** sie eine mittlere Porenweite von 10 bis 2000 nm aufweist.

8. Membran gemäß einem der Ansprüche 1 bis 7,
**dadurch gekennzeichnet,**
**dass** die Membran eine Zugfestigkeit von mehr als 1 N/cm aufweist.

9. Membran gemäß zumindest einem der Ansprüche 1 bis 8,
**dadurch gekennzeichnet,**
**dass** die Membran ohne Beschädigung bis auf einen Radius bis herab zu 100 m biegbar ist.

10. Membran gemäß zumindest einem der Ansprüche 1 bis 9,
**dadurch gekennzeichnet,**
**dass** die Membran ohne Beschädigung bis auf einen Radius bis herab zu 2 mm biegbar ist.

11. Verfahren zur Herstellung einer Membran gemäß zumindest einem der Ansprüche 1 bis 10,
**dadurch gekennzeichnet,**
**dass** ein Substrat, mit einer Dicke von 10 bis 200 µm, ausgewählt aus Vliesen von Polymer- oder Naturfasern, die eine Porosität von mehr als 50 % aufweisen, mit einer Beschichtung versehen wird, wobei die Beschichtung eine poröse, keramische Beschichtung ist, die auf und in das Substrat durch Aufbringen einer Suspension und zumindest einmaliges Erwärmen, bei welchem die Suspension auf und im Substrat verfestigt wird, aufgebracht wird und wobei die Suspension zumindest ein Oxid der Metalle Al, Zr, Si, Ti und/oder Y und ein Sol aufweist.

12. Verfahren nach Anspruch 11,
**dadurch gekennzeichnet,**
**dass** die Suspension durch Aufdrucken, Aufpressen, Einpressen, Aufrollen, Aufrakeln, Aufstreichen, Tauchen, Spritzen oder Aufgießen auf und in das Substrat gebracht wird.

13. Verfahren nach zumindest einem der Ansprüche 11 oder 12,
**dadurch gekennzeichnet,**
**dass** die Polymerfasern ausgewählt sind aus Polyacrylnitril, Polyamiden, Polyacrylaten, Polyimiden, Polytetrafluorethylen, Polyester und/oder Polyolefin.

14. Verfahren nach zumindest einem der Ansprüche 11 bis 13,
**dadurch gekennzeichnet,**
**dass** die Suspension, zumindest ein Metalloxidsol, zumindest ein Halbmetalloxidsol oder zumindest ein Mischmetalloxidsol oder eine Mischung dieser Sole aufweist, und durch Suspendieren zumindest einer anorganischen Komponente in zumindest einem dieser Sole hergestellt wird.

15. Verfahren nach Anspruch 14,
**dadurch gekennzeichnet,**
**dass** die Sole durch Hydrolisieren zumindest einer Metallverbindung, zumindest einer Halbmetallverbindung oder zumindest einer Mischmetallverbindung mit Wasser, oder einer Säure oder eine Kombination dieser Verbindungen erhalten werden.

16. Verfahren gemäß Anspruch 14 oder 15,
**dadurch gekennzeichnet,**
**dass** das Sol einen Anteil an Wasser und/oder Säure kleiner 50 Gew.-% aufweist.

17. Verfahren nach zumindest einem der Ansprüche 14 bis 16,
**dadurch gekennzeichnet,**
**dass** zumindest eine Metallalkoholatverbindung oder zumindest eine Halbmetallalkoholatverbindung ausgewählt aus den Alkoholatverbindungen der Elemente Zr, Al, Si, Ti und Y oder zumindest ein Metallnitrat, Metallcarbonat oder Metallhalogenid ausgewählt aus den Metallsalzen der Elemente Zr, Al, Si, Ti und Y als Metallverbindung hydrolisiert wird.

18. Verfahren nach zumindest einem der Ansprüche 11 bis 17,
**dadurch gekennzeichnet,**
**dass** als eine anorganische Komponente, zumindest ein Oxid, ausgewählt aus den Oxiden der Elemente Y, Zr, Al, Si, und Ti suspendiert wird.

19. Verfahren nach zumindest einem der Ansprüche 11 bis 18,
**dadurch gekennzeichnet,**
**dass** der Massenanteil der suspendierten Komponente dem 0,1 bis 500-fachen des eingesetzten Sols entspricht.

20. Verfahren nach zumindest einem der Ansprüche 11 bis 19,
**dadurch gekennzeichnet,**
**dass** der Suspension ein Haftvermittler beigefügt wird.

21. Verfahren nach zumindest einem der Ansprüche 11 bis 20,
**dadurch gekennzeichnet,**
**dass** der Träger vor dem Aufbringen der Suspension mit einem Haftvermittler auf den Fasern versehen wurde.

22. Verfahren nach den Ansprüchen 20 oder 21,
**dadurch gekennzeichnet,**
**dass** der Haftvermittler ausgewählt ist aus den organofunktionellen Silanen und/oder den Oxiden der Elemente Zr, Al, Si oder Ti.

23. Verfahren nach Anspruch 22,
**dadurch gekennzeichnet,**
**dass** der Haftvermittler ausgewählt ist aus 3-Aminopropyltriethoxysilan, 2-Aminoethyl-3-aminopropyltrimethoxysilan, 3-Glycidyloxytrimethoxysilan, 3-Methacrytoxypropyltrimethoxysilan, Vinyltriethoxysilan, Vinyltrimethoxysilan und Vinyltris(2-methoxyethoxy)silan.

24. Verfahren nach zumindest einem der Ansprüche 11 bis 23,
**dadurch gekennzeichnet,**
**dass** die auf und im Support vorhandene Suspension durch Erwärmen auf 50 bis 350 °C verfestigt wird.

25. Verfahren nach Anspruch 24,
**dadurch gekennzeichnet,**
**dass** das Erwärmen für 0,5 bis 10 Minuten bei einer Temperatur von 110 bis 280 °C erfolgt.

26. Verwendung einer Membran gemäß zumindest einem der Ansprüche 1 bis 10 als Separator in Batterien.

27. Verwendung einer Membran gemäß zumindest einem der Ansprüche 1 bis 10 als Träger für Ultrafiltrations-, Nanofiltrations-, Umkehrosmose-, Gastrenn- oder Pervaporationsmembranen.

28. Verwendung einer Membran gemäß zumindest einem der Ansprüche 1 bis 10 als Mikrofiltrationsmembran.

## Claims

1. A membrane comprising a sheetlike flexible substrate having a multiplicity of openings and having a porous coating on and in the substrate, the coating comprising inorganic components, **characterized in that** the material of the substrate is selected from nonwovens of polymeric or natural fibres, the nonwovens having a porosity of more than 50%, the substrate is from 10 to 200 µm thick and the coating is a porous ceramic coating.

2. A membrane according to claim 1, **characterized in that** the polymeric fibres are selected from polyacrylonitrile, polyamides, polyimides, polyacrylates, polytetrafluoroethylene, polyester and/or polyolefin.

3. A membrane according to either of claims 1 and 2, **characterized in that** the polymeric fibres are from 1 to 25 µm in diameter.

4. A membrane according to any one of claims 1 to 3, **characterized in that** that the porosity of the substrate is in the range from more than 50 to 97%.

5. A membrane according to at least one of claims 1 to 4, **characterized in that** the coating on and in the substrate comprises an oxide of the metals Al, Zr, Si, Ti and/or Y.

6. A membrane according to any one of claims 1 to 5, **characterized in that** it has a porosity in the range from 10 to 70%.

7. A membrane according to at least one of claims 1 to 6, **characterized in that** it has an average pore size in the range from 10 to 2000 nm.

8. A membrane according to any one of claims 1 to 7, **characterized in that** it has a tensile strength of more than 1 N/cm.

9. A membrane according to at least one of claims 1 to 8, **characterized in that** it is bendable to a radius down to 100 m without damage.

10. A membrane according to at least one of claims 1 to 9, **characterized in that** it is bendable to a radius down to 2 mm without damage.

11. A process for producing a membrane according to at least one of claims 1 to 10, **characterized in that** a substrate with a thickness from 10 to 200 µm, selected from nonwovens of polymeric or natural fibres, which nonwovens have a porosity of more than 50%, is provided with a coating, the coating being a porous ceramic coating which is brought onto and into the substrate by applying a suspension and heating one or more times to solidify the suspension on and in the substrate, the suspension comprising at least one oxide of the metals Al, Zr, Si, Ti and/or Y and a sol.

12. A process according to claim 11, **characterized in that** the suspension is brought onto and into the substrate by printing on, pressing on, pressing in, rolling on, knifecoating on, spreadcoating on, dipping, spraying or pouring on.

13. A process according to at least one of claims 11 and 12, **characterized in that** the polymeric fibres are selected from polyacrylonitrile, polyamides, polyimides, polyacrylates, polytetrafluoroethylene, polyester and/or polyolefin.

14. A process according to at least one of claims 11 to 13, **characterized in that** the suspension comprises at least one metal oxide sol, at least one semimetal oxide sol or at least one mixed metal oxide sol or a mixture thereof and is prepared by suspending at least one inorganic component in at least one of these sols.

15. A process according to claim 14, **characterized in that** the sol is obtained by hydrolysing at least one metal compound, at least one semimetal compound or at least one mixed metal compound using water or an acid or a combination thereof.

16. A process according to claim 14 or 15, **characterized in that** the sol comprises less than 50% by weight of water and/or acid.

17. A process according to at least one of claims 14 to 16, **characterized in that** the metal compound hydrolysed is at least one metal alkoxide compound or at least one semimetal alkoxide compound selected from the alkoxide compounds of the elements Zr, Al, Si, Ti and Y or at least one metal nitrate, metal carbonate or metal halide selected from the metal salts of the elements Zr, Al, Si, Ti and Y.

18. A process according to at least one of claims 11 to 17, **characterized in that** the inorganic component suspended is at least one oxide selected from the oxides of the elements Y, Zr, Al, Si and Ti.

19. A process according to at least one of claims 11 to 18, **characterized in that** the mass fraction of the suspended component is from 0.1 to 500 times that of the sol used.

20. A process according to at least one of claims 11 to 19, **characterized in that** an adhesion promoter is added to the suspension.

21. A process according to at least one of claims 11 to 20, **characterized in that** the carrier was provided with an adhesion promoter on the fibres prior to the application of the suspension.

22. A process according to either of claims 20 and 21, **characterized in that** the adhesion promoter is selected from the organofunctional silanes and/or the oxides of the elements Zr, Al, Si or Ti.

23. A process according to claim 22, **characterized in that** the adhesion promoter is selected from 3-aminopropyltriethoxysilane,2-aminoethyl-3-aminopropyltrimethoxysilane,3-glycidyloxytrimethoxysilane, 3-methacryloyloxypropyltrimethoxysilane, vinyltriethoxysilane, vinyltrimethoxysilane and vinyl-tris(2-methoxyethoxy)silane.

24. A process according to at least one of claims 11 to 23, **characterized in that** the suspension present on and in the support is solidified by heating at from 50 to 350°C.

25. A process according to claim 24, **characterized in that** the heating is effected at from 110 to 280°C for from 0.5 to 10 minutes.

26. The use of a membrane according to at least one of claims 1 to 10 as a separator in batteries.

27. The use of a membrane according to at least one of claims 1 to 10 as a carrier for an ultrafiltration, nanofiltration, reverse osmosis, gas separation or pervaporation membrane.

28. The use of a membrane according to at least one of claims 1 to 10 as a microfiltration membrane.

## Revendications

1. Membrane comportant un substrat flexible étendu doté d'une multitude d'ouvertures, avec, sur et dans ce substrat, un revêtement poreux qui présente des composants inorganiques,
**caractérisée en ce qu'**
on choisit la matière du substrat parmi des non-tissés de fibres polymères ou naturelles, les non-tissés ayant une porosité supérieure à 50 %, le substrat ayant une épaisseur de 10 à 200 µm et le revêtement étant un revêtement céramique poreux.

2. Membrane selon la revendication 1,
**caractérisée en ce que**
les fibres polymères sont choisies parmi le polyacrylonitrile, les polyamides, les polyimides, les polyacrylates, le polytétrafluoréthylène, le polyester et/ou la polyoléfine.

3. Membrane selon l'une quelconque des revendications 1 ou 2,
**caractérisée en ce que**
les fibres polymères ont un diamètre de 1 à 25 µm.

4. Membrane selon l'une quelconque des revendications 1 à 3,
**caractérisée en ce que**
la porosité du substrat est supérieure à 50 % jusqu'à 97 %.

5. Membrane selon au moins l'une quelconque des revendications 1 à 4,
**caractérisée en ce que**
le revêtement se trouvant sur et dans le substrat présente un oxyde des métaux Al, Zr, Si, Ti et/ou Y.

6. Membrane selon l'une quelconque des revendications 1 à 5,
**caractérisée en ce que**
la membrane a une porosité de 10 à 70 %.

7. Membrane selon au moins l'une quelconque des revendications 1 à 6,
**caractérisée en ce qu'**
elle a une largeur de pore moyenne de 10 à 2000 nm.

8. Membrane selon l'une quelconque des revendications 1 à 7,
**caractérisée en ce qu'**
la membrane a une résistance à la traction supérieure à 1 N/cm.

9. Membrane selon au moins l'une quelconque des revendications 1 à 8,
**caractérisée en ce que**
la membrane peut être repliée, sans se détériorer, jusqu'à un rayon en deçà de 100 m.

10. Membrane selon au moins l'une quelconque des revendications 1 à 2,
**caractérisée en ce que**
la membrane peut être repliée, sans se détériorer, jusqu'à un rayon en deçà de 2 mm.

11. Procédé de fabrication d'une membrane selon au moins l'une quelconque des revendications 1 à 10,
**caractérisé en ce qu'**
un substrat, d'une épaisseur de 10 à 200 µm, choisi parmi des non-tissés de fibres polymères ou naturelles qui ont une porosité supérieure à 50 %, est doté d'un revêtement, ce revêtement étant un revêtement céramique poreux qui est appliqué sur et dans le substrat par application d'une suspension et au moins un réchauffement unique, lors duquel la suspension est solidifiée sur et dans le substrat et la suspension comportant au moins un oxyde des métaux Al, Zr, Si, Ti et/ ou Y et un sol.

12. Procédé selon la revendication 11,
**caractérisé en ce que**
la suspension est posée sur et dans le substrat par impression, pression, injection sous pression, déroulement, raclage, badigeonnage, immersion, pulvérisation ou coulée.

13. Procédé selon au moins l'une quelconque des revendications 11 ou 12,
**caractérisé en ce qu'**
on choisit les fibres polymères parmi le polyacrylonitrile, les polyamides, les polyacrylates, les polyimides, le polytétrafluoréthylène, le polyester et/ou la polyoléfine.

14. Procédé selon au moins l'une quelconque des revendications 11 ou 13,
**caractérisé en ce que**
la suspension présente au moins un sol d'oxyde métallique, au moins un sol d'oxyde métalloïdique ou au moins un sol d'oxyde d'alliage de terres rares métalliques ou bien un mélange de ces sols et est préparée par mise en suspension d'au moins un composant inorganique dans au moins un de ces sols.

15. Procédé selon la revendication 14,
**caractérisé en ce qu'**
on obtient les sols par hydrolysation d'au moins un composé métallique, d'au moins un composé métalloïdique ou d'au moins un composé d'alliage de terres rares métalliques avec de l'eau, ou d'un acide ou bien une combinaison de ces composés.

16. Procédé selon la revendication 14 ou 15,
**caractérisé en ce que**
le sol présente une fraction d'eau et/ou d'acide inférieure à 50 % en poids.

17. Procédé selon au moins l'une quelconque des revendications 14 à 16,
**caractérisé en ce qu'**
on hydrolyse au moins un composé d'alcoolat métallique ou au moins un composé d'alcoolat métalloïdique choisi parmi les composés d'alcoolat des éléments Zr, Al, Si, Ti et Y ou au moins un nitrate métallique, un carbonate métallique ou un halogénure métallique choisi parmi les sels métalliques des éléments Zr, Al, Si, Ti et Y en tant que composé métallique.

18. Procédé selon au moins l'une quelconque des revendications 11 à 17,
**caractérisé en ce qu'**
on met en suspension, en tant que composant inorganique, au moins un oxyde, choisi parmi les oxydes des éléments Y, Zr, Al, Si et Ti.

19. Procédé selon au moins l'une quelconque des revendications 11 à 18,
**caractérisé en ce que**
la fraction massique du composant mis en suspension correspond à 0,1 à 500 fois le sol utilisé.

20. Procédé selon au moins l'une quelconque des revendications 11 à 19,
**caractérisé en ce qu'**
on ajoute à la suspension un agent d'adhérence.

21. Procédé selon au moins l'une quelconque des revendications 11 à 20,
**caractérisé en ce que**
le support a été doté d'un agent d'adhérence sur les fibres avant l'application de la suspension.

22. Procédé selon les revendications 20 ou 21,
**caractérisé en ce qu'**
on choisit l'agent d'adhérence parmi les silanes organofonctionnels et/ou les oxydes des éléments Zr, Al, Si ou Ti.

23. Procédé selon la revendication 22,
**caractérisé en ce qu'**
on choisit l'agent d'adhérence parmi le 3-aminopropyltriéthoxysilane, le 2-aminoéthyl-3-aminopropyltriméthoxysilane, le 3-glycidyloxytriméthoxysilane, le 3-méthacryloxypropyltriméthoxysilane, le vinyltriéthoxysilane, le vinyltriméthoxysilane et le vinyltris(2-méthoxyéthoxy)silane.

24. Procédé selon au moins l'une quelconque des revendications 11 à 23,
**caractérisé en ce que**
la suspension, présente sur et dans le support, est solidifiée par réchauffement à 50 à 350°C.

25. Procédé selon la revendication 24,
**caractérisé en ce que**
le réchauffement dure de 0,5 à 10 minutes à une température de 110 à 280°C.

26. Utilisation d'une membrane selon au moins l'une quelconque des revendications 1 à 10, en tant que séparateur dans des batteries.

27. Utilisation d'une membrane selon au moins l'une quelconque des revendications 1 à 10, en tant que support pour des membranes d'ultrafiltration, de nanofiltration d'osmose inverse, de séparation des gaz ou de pervaporation.

28. Utilisation d'une membrane selon au moins l'une quelconque des revendications 1 à 10, en tant que membrane de microfiltration.
